# EUROPÄISCHE PATENTSCHRIFT

(11) **EP 2 894 461 B1**
(45) Veröffentlichungstag und Bekanntmachung des Hinweises auf die Patenterteilung: **30.05.2018**
(21) Anmeldenummer: 14004263.1
(22) Anmeldetag: 17.12.2014
(51) Int. Cl.: G01K 11/12, G01B 11/06, G01N 21/47, G01N 21/80

(54) **Messeinrichtung und Messverfahren zur Messung einer Messgröße mittels einer Beugungsmessung**
Measuring device and measuring method for measuring an indicator by means of a diffraction measurement
Dispositif de mesure et procédé de mesure d'une grandeur de mesure au moyen d'une mesure de diffraction

(30) Priorität: 10.01.2014 DE 102014000311
(43) Veröffentlichungstag der Anmeldung: 15.07.2015
(73) Patentinhaber: Fraunhofer-Gesellschaft zur Förderung der angewandten Forschung e.V., 80686 München (DE)
(72) Erfinder: Kozma, Peter Daniel, 1149 Budapest (HU); Bier, Frank Fabian, 14482 Potsdam (DE); Ehrentreich-Förster, Eva, 14558 Potsdam (DE)
(74) Vertreter: v. Bezold & Partner Patentanwälte - PartG mbB

(56) Entgegenhaltungen:
- WO-A1-2011/156713
- US-A- 5 015 867
- J H ET AL: "Polymerized colloidal crystal hydrogel films, as inteligent chemical sensing materials", NATURE, NATURE PUBLISHING GROUP, UNITED KINGDOM, Bd. 389, 23. Oktober 1997 (1997-10-23), Seiten 829-832, XP002137429, ISSN: 0028-0836, DOI: 10.1038/39834
- Y.-J. LEE ET AL: "Tunable Inverse Opal Hydrogel pH Sensors", ADVANCED MATERIALS, Bd. 15, Nr. 78, 17. April 2003 (2003-04-17), Seiten 563-566, XP055181189, ISSN: 0935-9648, DOI: 10.1002/adma.200304588
- SATYAMOORTHY KABILAN ET AL: "Holographic glucose sensors", BIOSENSORS AND BIOELECTRONICS, vol. 20, no. 8, 1 February 2005 (2005-02-01), pages 1602-1610, XP055366850, NL ISSN: 0956-5663, DOI: 10.1016/j.bios.2004.07.005

## Beschreibung

Die Erfindung betrifft eine Messeinrichtung und ein entsprechendes Verfahren zur Messung einer Messgröße mittels einer Beugungsmessung.

Aus dem Stand der Technik ist es bekannt, den Durchmesser verschiedener Gegenstände mit erhöhter Genauigkeit durch die Messung der Fresnel-Diffraktion zu messen (vgl. US 2002/0044289 A1, US 6 922 254 B2, GB 1 405 953 A, US 3 941 484, GB 2 095 827 A, US 5 015 867 und DE 197 58 214 A1). Bei diesen Veröffentlichungen wird als Messgröße also der Durchmesser beziehungsweise die Änderung des Durchmessers der jeweiligen Gegenstände gemessen.

Es ist weiterhin aus dem Stand der Technik bekannt, dass opto-geometrische Parameter einer optischen Faser durch dieses Prinzip messbar sind (vgl. Sabatyan/Tavassoly: "Application of Fresnel diffraction to nondestructive measurement of the refractive index of optical fibers", Optical Engineering 46 (12), 128001 (Dezember 2007). Die Autoren dieser Publikation haben zusätzlich demonstriert, dass die Messung der Fresnel-Diffraktion an einer optischen Faser auch für refraktometrische Aufgaben anwendbar ist (vgl. Sabatyan/Tavassoly: "Determination of refractive indices of liquids by Fresnel diffraction", Optics & Laser Technology 41 (2009), 892-896).

Ferner wurde im Stand der Technik bereits gezeigt, dass dünne Polyelektrolyt-Multischichten auf einer optischen Faser absorbiert werden können, wobei durch Fluoreszenzmarkierung die Diffusionsparameter einiger Moleküle mit Hilfe eines konfokalen Mikroskops ausgemessen werden können (vgl. Uhlig et al.: "3d localization and diffusion of proteins in polyelectrolyte multilayers", Soft Matter, 2012, 8, 11786-11789).

Es ist auch schon bekannt, dass diese dünnen Schichten beispielsweise für eine markierungsfreie Biosensorik, pH-Messung oder Temperaturmessung anwendbar sind, weil die Bindung der Target-Moleküle, die pH-Änderung und die Temperaturänderung der Umgebung ein Schwellen der Dünnschichten bewirkt (vgl. Miyata: "Preparation of smart soft materials using molecular complexes", Polymer Journal (2010), 42, 277-289; Kumar: "Smart polymers: Physical forms and bioengeneering applications", Progress in Polymer Science 32 (2007) 1205-1237; Mateescu: "Thin Hydrogel Films for Optical Biosensor Applications", Membranes 2012, 2, 40-69; Buller et al: "Photoreactive oligoethylene glycol polymers - versatile compounds for surface modification by thin hydrogel films", Soft Matter, 2013, 9, 929).

Für das Auslesen des Schwellens der Schichten wurden bisher viele Verfahren (z.B. optische, konduktometrische oder mechanische Verfahren) vorgeschlagen (vgl. Richter et al.: "Review on Hydrogel-based pH Sensors and Microsensors", Sensors 2008, 8, 561-581). Die aus dem Stand der Technik bekannten Sensorkonfigurationen beziehungsweise Sensorverfahren zur Messung des Schwellens der Schichten sind aber typischerweise groß, kompliziert, teuer und/oder beeinflussen die Probe und dadurch auch die Messung.

Darüber hinaus können die bekannten Sensoranordnungen beziehungsweise Sensorverfahren nur in Ausnahmefällen unabhängige Informationen über die Dicke und die Qualität der Schicht geben. Daher sind eine Dickenänderung und eine strukturelle Änderung der Schichten nicht getrennt messbar. Es kann sogar zu falsch-positiven oder falsch-negativen Ergebnissen kommen.

Ferner ist zum Stand der Technik hinzuweisen auf Yun-Ju Lee, Paul V. Braun: Tunable Inverse Opal Hydrogel pH Sensors. Adv. Mater., Vol. 15, Nr. 7-8, 2003, Seiten 563-566); John H. Holtz, Sanford A. Asher: Polymerized colloidal crystal hydrogel films as intelligent chemical sensing materials. Nature, Vol. 389, 1997, Seiten 829-832; Satyamoorthy Kabilan: Holographic glucose sensors. Biosensors and Bioelectronics, Vol. 20, 2005, Seiten 1602-1610 und Tianyue Yu u.a. Microfabrication of Hydrogels for Biomedical Applications. Proceedings of SPIE Vol. 4690, 2002, Seiten 854-860. Diese Veröffentlichungen betreffen jedoch nicht die Fresnel-Diffraktion (Fresnel-Beugung), und sind deshalb fernliegend.

Schließlich ist zum Stand der Technik noch hinzuweisen auf WO 2011/156713 A1, J H ET AL: "Polymerized colloidal crystal hydrogel films, as inteligent chemical sensing materials,,, NATURE, NATURE PUBLISHING GROUP, UNITED KINGDOM, Bd. 389, 23. Oktober 1997 (1997-10-23), Seiten 829-832, XP002137429, ISSN: 0028-0836, DOI: 10.1038/39834 *S. 829 rechte Spalte letzter und vorletzter Absatz*, Y.-J. LEE ET AL: "Tunable Inverse Opal Hydrogel pH Sensors", ADVANCED MATERIALS, Bd. 15, Nr. 78, 17. April 2003 (2003-04-17), Seiten 563-566, XP055181189, ISSN: 0935-9648, DOI: 10.1002/adma.200304588 *S. 563 rechte Spalte letzter Absatz, S. 564 linke Spalte zweiter Absatz, S. 566 "Experimental" Absatz, Fig. 1a, 2a* und US 5 015 867 A. Diese Druckschriften offenbaren jedoch keine Messungen mittels eines Fresnel-Beugungsbildes.

Der Erfindung liegt deshalb die Aufgabe zugrunde, eine entsprechend verbesserte Messeinrichtung und ein entsprechendes Messverfahren zu schaffen.

Diese Aufgabe wird durch eine erfindungsgemäße Messeinrichtung beziehungsweise ein erfindungsgemäßes Messverfahren gemäß den unabhängigen Ansprüchen gelöst.

Die Erfindung beruht zum einen auf der technischphysikalischen Erkenntnis, dass Fresnel-Beugungsbilder von beschichteten Gegenständen in Abhängigkeit von der Schichtdicke auf dem Gegenstand schwanken, so dass sich aus dem Fresnel-Beugungsbild Rückschlüsse auf die Schichtdicke schließen lassen. Zum anderen beruht die Erfindung auf der technischphysikalischen Erkenntnis, dass Eigenschaften (z.B. Temperatur, Druck, pH-Wert, etc.) der Umgebung des beschichteten Gegenstands die Schichtdicke einer Sensorschicht auf dem Gegenstand beeinflussen, was sich dann auch in einem entsprechend veränderten Fresnel-Beugungsbild niederschlägt. Die Erfindung umfasst deshalb die allgemeine technische Lehre, Fresnel-Beugungsbilder eines Gegenstands auszuwerten, um daraus eine Messgröße abzuleiten, welche eine Eigenschaft einer Umgebung eines mit einer Sensorschicht beschichteten Gegenstands wiedergibt, der die Fresnel-Beugungsbilder erzeugt.

Die erfindungsgemäße Messeinrichtung weist zunächst eine Strahlungsquelle und einen Strahlungsdetektor auf, der im Strahlengang der Strahlungsquelle angeordnet ist.

Zwischen der Strahlungsquelle und dem Strahlungsdetektor befindet sich bei der erfindungsgemäßen Messeinrichtung ein Gegenstand im Strahlengang der Strahlungsquelle, wobei der Gegenstand ein Beugungsbild erzeugt, das von dem Strahlungsdetektor gemessen wird, wobei es sich um ein Fresnel-Beugungsbild handelt.

Die erfindungsgemäße Messeinrichtung misst als Messgröße eine Eigenschaft der Umgebung des Gegenstands, wie beispielsweise Temperatur, Druck, Lichtintensität oder pH-Wert, etc. Wichtig ist hierbei, dass die Messgröße eine umgebungsabhängige Eigenschaftsgröße (z.B. Schichtdicke einer Sensorschicht auf dem Gegenstand) des Gegenstands beeinflusst, so dass die umgebungsabhängige Eigenschaftsgröße des Gegenstands die Messgröße wiedergibt.

Weiterhin ist es wichtig, dass die umgebungsabhängige Eigenschaftsgröße (z.B. Schichtdicke einer Sensorschicht auf dem Gegenstand) des Gegenstands das Beugungsbild beeinflusst, so dass das gemessene Beugungsbild des Gegenstands die umgebungsabhängige Eigenschaftsgröße (z.B. Schichtdicke einer Sensorschicht auf dem Gegenstand) und damit auch die Messgröße (z.B. Temperatur, Druck, Lichtintensität, pH-Wert, etc.) wiedergibt.

Bei der erfindungsgemäßen Messeinrichtung beeinflusst also die interessierende Messgröße (z.B. Temperatur, Druck, Lichtintensität, pH-Wert, etc.) in der Umgebung des Gegenstands zunächst eine Eigenschaftsgröße (z.B. Schichtdicke einer Sensorschicht) des Gegenstands. Die umgebungsabhängige Eigenschaftsgröße (z.B. Schichtdicke einer Sensorschicht) des Gegenstands beeinflusst dann ihrerseits das gemessene Beugungsbild, so dass sich aus dem Beugungsbild die Messgröße ableiten lässt.

Gemäß der Erfindung wird auf den Gegenstand im Strahlengang der Strahlungsquelle eine Sensorschicht aufgebracht, was an sich aus den eingangs zitierten Publikationen bekannt ist. Die umgebungsabhängige Eigenschaftsgröße des Gegenstands ist dann ein Schichtparameter der Sensorschicht. Das gemessene Beugungsbild hängt dann wiederum von dem Schichtparameter (z.B. Schichtdicke) der Sensorschicht auf dem Gegenstand ab, so dass sich aus dem gemessenen Beugungsbild mittelbar die Messgröße ableiten lässt.

Es wurde bereits vorstehend kurz erwähnt, dass es sich bei dem umgebungsabhängigen Schichtparameter der Sensorschicht beispielsweise um die Schichtdicke oder die Änderung der Schichtdicke der Sensorschicht handeln kann. Es ist jedoch im Rahmen der Erfindung auch möglich, dass es sich bei dem umgebungsabhängigen Schichtparameter der Sensorschicht auf dem Gegenstand um den Brechungsindex der Sensorschicht oder dessen Änderung handelt. Eine weitere Möglichkeit besteht darin, dass der umgebungsabhängige Schichtparameter der Sensorschicht auf dem Gegenstand der Extinktionskoeffizient oder dessen Änderung ist. Ferner kann es sich bei den umgebungsabhängigen Schichtparameter um die Schichtstruktur oder die Änderung der Schichtstruktur handeln. Die vorstehend exemplarisch genannten Beispiele für den umgebungsabhängigen Schichtparameter der Sensorschicht können jeweils allein oder in beliebiger Kombination realisiert werden.

Weiterhin besteht im Rahmen der Erfindung die Möglichkeit, dass die Sensorschicht aus einem Material besteht, das eine Änderung der Messgröße (z.B. Temperatur, Druck, Lichtintensität, pH-Wert, etc. in der Umgebung des Gegenstands) mit einer Änderung von Schichtdicke, Brechungsindex, Extinktionskoeffizient und/oder Struktur der Sensorschicht reagiert.

Vorstehend wurde bereits kurz erwähnt, dass es sich bei der interessierenden Messgröße beispielsweise um die Temperatur, den Druck, die Lichtintensität oder den pH-Wert in der Umgebung des Gegenstands handeln kann, der sich im Strahlengang zwischen der Strahlungsquelle und dem Strahlungsdetektor befindet. Allgemein lässt sich sagen, dass es sich bei der Messgröße um einen physikalischen Parameter (z.B. Temperatur, Druck, Lichtintensität, Intensität eines elektromagnetischen Feldes, etc.), einen chemischen Parameter (z.B. pH-Wert, Konzentration einer Komponente in Lösung oder Gas, etc.) oder um einen biologischen Parameter (z.B. Anwesenheit und/oder Konzentration eines bestimmten biologischen Targets, etc.) der Umgebung handeln kann. Die Erfindung eignet sich also vorteilhaft zur Messung verschiedenster Typen von Messgrößen, sofern die Messgrößen einen Einfluss auf den Gegenstand und damit mittelbar auch auf das gemessene Beugungsbild haben.

In einem Ausführungsbeispiel der Erfindung enthält die Umgebung der Sensorschicht auf dem Gegenstand Target-Moleküle in einer bestimmten Konzentration, während die Sensorschicht entsprechende Erkennungs-Elemente (z.B. Molekular-Imprints, Enzyme, Nukleinsäuren, Aptamere, Antikörper, etc.) enthält, die auf die Target-Moleküle in der Umgebung ansprechen, insbesondere durch eine spezifische Bindung der Target-Moleküle an die Erkennungs-Elemente, so dass der umgebungsabhängige Schichtparameter der Sensorschicht von der Konzentration der Target-Moleküle in der Umgebung der Sensorschicht abhängt. Auf diese Weise lässt sich also die Konzentration der Target-Moleküle in der Umgebung der Sensorschicht messen.

Bei der Umgebung des Gegenstands kann es sich beispielsweise um eine Flüssigkeit (z.B. eine Lösung) handeln, so dass sich der im Strahlengang angeordnete Gegenstand in der Flüssigkeit befindet.

Es ist jedoch alternativ auch möglich, dass die Umgebung des Gegenstands ein Gas ist.

In dem bevorzugtem Ausführungsbeispiel der Erfindung hat der Gegenstand einen kreisförmigen oder vieleckigen (z.B. rechteckigen) Querschnitt und ist langgestreckt, wobei die Längsachse des Gegenstands vorzugsweise rechtwinklig zum Strahlengang ausgerichtet ist. Die Erfindung ist jedoch hinsichtlich der Querschnittsform und der Gestaltung des Gegenstands nicht auf dieses Ausführungsbeispiel beschränkt.

Es wurde bereits vorstehend kurz erwähnt, dass die Umgebung des Gegenstands eine Flüssigkeit sein kann. In diesem Fall wird der Gegenstand vorzugsweise in einem Behälter (z.B. einer Küvette) angeordnet, wobei der Behälter für die Strahlung transparent ist. Die Wandung des Behälters hält also einerseits die Flüssigkeit in dem Behälter zurück und lässt andererseits die Strahlung durch. Eine solche Küvette ist auch im Falle einer Gasumgebung benutzbar, wenn es in Bezug auf die Anwendung nötig ist.

Der Strahlungsdetektor misst das Beugungsbild des Gegenstands vorzugsweise mit einer spektralen Auflösung und mit einer örtlichen Auflösung. Beispielsweise kann es sich bei dem Strahlungsdetektor um einen CCD-Detektor (CCD: Charge coupled device) oder um einen CMOS-Detektor (CMOS: Complementary metal oxide semiconductor) handeln. Die Erfindung ist jedoch nicht auf diese Detektortypen beschränkt, sondern grundsätzlich auch mit anderen Detektortypen realisierbar. Weiterhin ist zu erwähnen, dass der Strahlungsdetektor ein Detektorarray mit einer flächigen Detektorfläche sein kann. Es besteht auch die Möglichkeit, dass mehrere Strahlungsdetektoren vorgesehen sind, die eine parallele Detektion in getrennten Detektionskanälen ermöglichen. Ferner ist zu erwähnen, dass der Strahlungsdetektor ausgangsseitig mit einer Auswertungseinheit verbunden ist, die das gemessene Beugungsbild auswertet und aus dem gemessenen Beugungsbild die Messgröße ableitet.

Zu der Strahlungsquelle ist zu erwähnen, dass die von der Strahlungsquelle emittierte Strahlung kohärent und vorzugsweise kollimiert und homogen ist, was an sich aus dem Stand der Technik bekannt ist und deshalb nicht weiter beschrieben werden muss. Falls die Strahlung nicht kollimiert und/oder homogen ist, soll die Intensitätsabweichung der Strahlungsquelle vorzugsweise bekannt sein oder kalibriert werden. Beispielsweise kann die Strahlungsquelle einen Laser aufweisen, insbesondere einen Weißlichtlaser, eine Laserdiode oder ein Laserdioden-Array.

In einer Variante der Erfindung weist die von der Strahlungsquelle emittierte Strahlung nur eine einzige diskrete Wellenlänge auf. In einer anderen Variante der Erfindung weist die von der Strahlungsquelle emittierte Strahlung dagegen mehrere diskrete Wellenlängen auf. Eine andere Variante der Erfindung sieht dagegen vor, dass die von der Strahlungsquelle emittierte Strahlung ein kontinuierliches Wellenlängenspektrum aufweist. In den letzten zwei Varianten ist die Detektion der Beugungsbilder differenter Wellenlängen beispielweise mit zeitlicher oder örtlicher Separation gelöst. Die Beugungsbilder können aber auch gleichzeitig mit dem gleichen Strahlungsdetektor detektiert werden. In diesem Fall wird die Separation nach der Detektion numerisch durchgeführt.

Zu dem im Strahlengang angeordneten Gegenstand beziehungsweise zu der Sensorschicht auf dem Gegenstand ist zu erwähnen, dass diese vorzugsweise für die Strahlung mindestens teilweise transparent sind, damit auch inhärente Parameter der Sensorschicht (z.B. Brechungsindex, Extinktionskoeffizient, Struktur) ausgemessen werden kann. Es besteht jedoch grundsätzlich im Rahmen der Erfindung auch die Möglichkeit, dass Gegenstand und/oder die Sensorschicht für die Strahlung nicht transparent sind.

In einem Ausführungsbeispiel der Erfindung sind im Strahlengang zwischen der Strahlungsquelle und dem Strahlungsdetektor mehrere Gegenstände angeordnet, die jeweils ein Beugungsbild erzeugen, wobei die verschiedenen Beugungsbilder von dem Strahlungsdetektor erfasst werden. Hierbei ist es vorteilhaft, wenn sich die Beugungsbilder der einzelnen Gegenstände auf dem Strahlungsdetektor nicht wesentlich überlappen.

Ferner ist zu erwähnen, dass die Erfindung auch Schutz beansprucht für ein entsprechendes Messverfahren, wie es sich bereits aus der vorstehenden Beschreibung ergibt, so dass auf eine separate Beschreibung des Messverfahrens verzichtet werden kann.

Andere vorteilhafte Weiterbildungen sind in den Unteransprüchen gekennzeichnet oder werden nachstehend zusammen mit der Beschreibung der bevorzugten Ausführungsbeispiele anhand der Figuren näher erläutert. Es zeigen:
- Figur 1: eine schematische Darstellung einer erfindungsgemäßen Messeinrichtung,
- Figur 2: Beispielmessungen mit der Messeinrichtung gemäß Figur 1 vor dem Schwellen der Sensorschicht beziehungsweise nach dem Schwellen der Sensorschicht,
- Figur 3: ein Ausführungsbeispiel für den im Strahlengang befindlichen Gegenstand mit einem kreisförmigen Querschnitt,
- Figur 4: ein anderes Ausführungsbeispiel eines Gegenstands mit einem rechteckigen Querschnitt, sowie
- Figur 5: eine Abwandlung des Ausführungsbeispiels gemäß Figur 1.

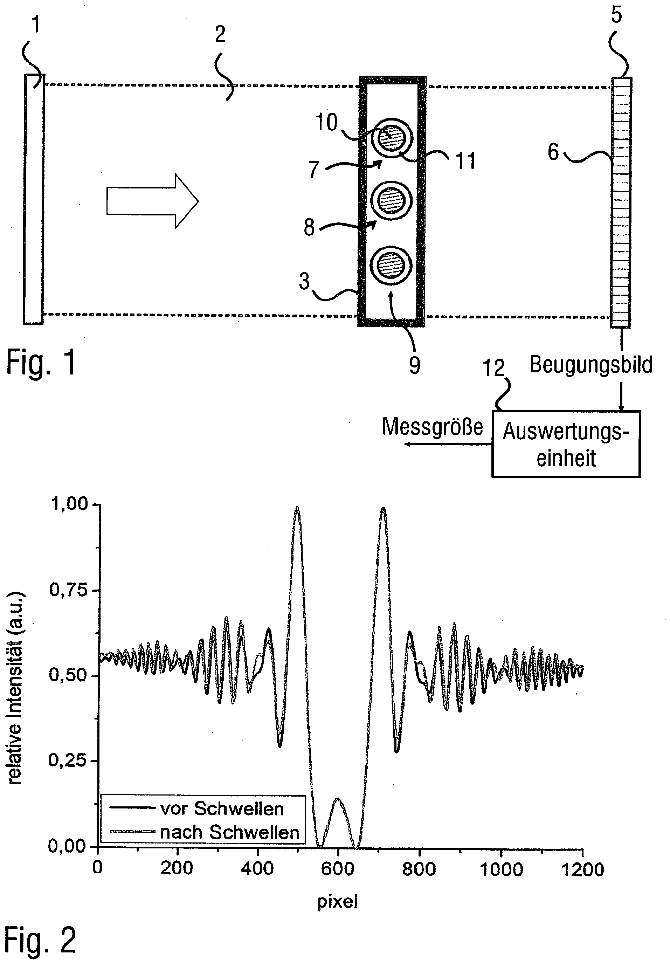

Figur 1 zeigt ein Ausführungsbeispiel einer erfindungsgemäßen Messeinrichtung mit einer Strahlungsquelle 1 (z.B. Weißlichtlaser, Laserdioden-Array) die einen homogenen, kollimierten und kohärenten Lichtstrahl 2 abgibt.

Im Strahlengang des Lichtstrahls 2 ist eine Küvette 3 angeordnet, die mit einer Flüssigkeit 4 gefüllt ist, wobei die Messeinrichtung eine Messgröße dieser Flüssigkeit in der Küvette 3 misst, wie noch detailliert beschrieben wird. Hierbei ist zu erwähnen, dass die Küvette 3 eine Wandung aufweist, die für den Lichtstrahl 2 im Wesentlichen transparent ist.

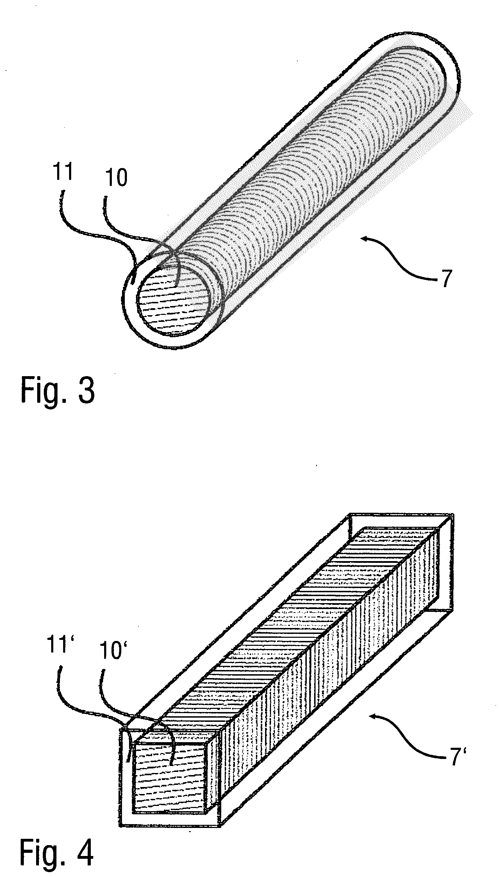

Im Strahlengang des Lichtstrahls 2 hinter der Küvette 3 ist ein Strahlungsdetektor 5 (z.B. CCD-Detektor oder CMOS-Detektor) angeordnet, wobei der Strahlungsdetektor 5 eine ausgedehnte Sensorfläche 6 aufweist. In der Küvette 3 befinden sich mehrere Gegenstände 7, 8, 9, die in Figur 3 detailliert dargestellt sind. Bei den Gegenständen 7-9 handelt es sich um langgestreckte Zylinder 10, die auf ihrer Mantelfläche mit einer Sensorschicht 11 beschichtet sind, wobei die Gegenstände 7 mit ihrer Längsachse rechtwinklig zu dem Lichtstrahl 2 ausgerichtet sind.

Eine alternativ mögliche Formgestaltung der Gegenstände 7-9 ist in Figur 4 dargestellt. Hierbei ist der Gegenstand 7' im Querschnitt rechteckig und besteht im Wesentlichen aus einem langestreckten Quader 10' mit einer darauf befindlichen Sensorschicht 11'.

Der Lichtstrahl 2 wird von den Gegenständen 7-9 optisch gebeugt (diffraktiert), so dass auf der Sensorfläche 6 des Strahlungsdetektors 5 Fresnel-Beugungsbilder erscheinen. Die Gegenstände 7-9 sind hierbei so angeordnet, dass die Fresnel-Beugungsbilder auf der Sensorfläche 6 des Strahlungsdetektors 5 nicht wesentlich überlappen.

Der Strahlungsdetektor 5 ist ausgangsseitig mit einer Auswertungseinheit 12 verbunden, die aus den gemessenen Fresnel-Beugungsbildern zunächst die Schichtparameter (z.B. Schichtdicke, Brechungsindex, Extinktionskoeffizient und/oder Struktur) der Sensorschichten 11 auf den Gegenständen 7-9 ermittelt. Hierbei wird die technisch-physikalische Erkenntnis ausgenutzt, dass sich die interessierende Messgröße (z.B. Temperatur, Druck, Lichtintensität, pH-Wert, etc.) der Flüssigkeit 4 in der Küvette 3 auf die Schichtdicke der Sensorschicht 11 auf den Gegenständen 7-9 auswirkt. Die Schichtdicke der Sensorschicht 11 auf den Gegenständen 7-9 beeinflusst wiederum das Fresnel-Beugungsbild, das von dem Strahlungsdetektor 5 gemessen wird. Aus den gemessenen Fresnel-Beugungsbildern lässt sich deshalb die interessierende Messgröße (z.B. Temperatur, Druck, Lichtintensität, pH-Wert, etc.) der Flüssigkeit 4 in der Küvette 3 zurück rechnen.
Figur 2 zeigt eine Beispielmessung. Hierbei handelt sich bei der Sensorschicht 11 um eine Polyelektrolyt-Multischicht auf Basis eines Polyelektrolytpaars Poly-L-Lysin/Hyaluronsäure, die nach einem elektrostatischen Schicht-für-Schicht-Verfahren auf eine zylinderförmige Glasfaser aufgebracht ist. Die Änderung des Profils des Diffraktionsmusters wurde durch ein Schwellen der Polyelektrolyt-Multischicht von ca. 5 µm bei der gleichmäßigen Zuführung des Poly-L-Lysins in die umgebende Flüssigkeit ausgelöst.

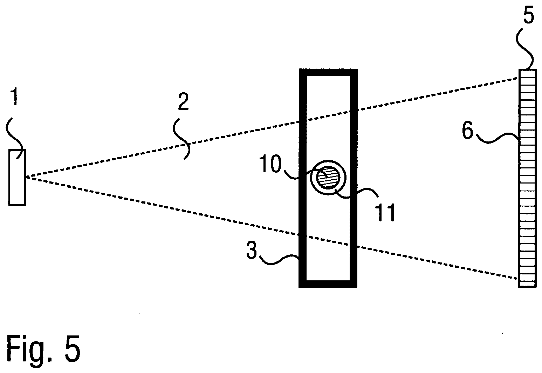

Figur 5 zeigt eine Abwandlung des Ausführungsbeispiels gemäß Figur 1. In diesem Fall ist die Strahlungsquelle 1 nicht kollimiert, wobei der Lichtstrahl 2 eine geringere seitliche Ausdehnung aufweist, so dass sich der Lichtstrahl 2 von der Strahlungsquelle 1 ausgehend zu dem Strahlungsdetektor 5 hin erweitert. Diese Beleuchtung beschränkt die Funktion der Messeinrichtung nicht, die Divergenz des Lichtstrahles 2 muss aber während der Auswertung berücksichtigt werden. Auch in diesem Fall besteht die Möglichkeit, mehrere Gegenstände 7 in der Küvette 3 zu platzieren.

### Bezugszeichenliste:

- 1: Strahlungsquelle
- 2: Lichtstrahl
- 3: Küvette
- 4: Flüssigkeit oder Gas in der Küvette
- 5: Strahlungsdetektor
- 6: Sensorfläche des Strahlungsdetektors
- 7: Gegenstand
- 7': Gegenstand
- 8: Gegenstand
- 9: Gegenstand
- 10: Zylinder
- 10': Quader
- 11: Sensorschicht
- 11': Sensorschicht
- 12: Auswertungseinheit

## Patentansprüche

1. Messeinrichtung zur Messung einer Messgröße mittels einer Beugungsmessung, mit
a) einer Strahlungsquelle (1), die Strahlung emittiert,
b) einem Gegenstand (7-9), der im Strahlengang der Strahlungsquelle (1) angeordnet ist, und
c) einem Strahlungsdetektor (5), der im Strahlengang der Strahlungsquelle (1) hinter dem Gegenstand (7-9) angeordnet ist und ein Fresnel-Beugungsbild des Gegenstands (7-9) misst,
d) einer Auswertungseinheit (12), wobei der Strahlungsdetektor (5) ausgangsseitig mit der Auswertungseinheit (12) verbunden ist und die Auswertungseinheit (12) das gemessene Fresnel-Beugungsbild auswertet und aus dem gemessenen Fresnel-Beugungsbild die Messgröße ableitet,
**dadurch gekennzeichnet,**
e) dass die zu messende Messgröße eine Eigenschaft einer Umgebung des Gegenstands (7-9) ist,
f) dass die Messgröße eine umgebungsabhängige Eigenschaftsgröße des Gegenstands (7-9) beeinflusst, so dass die umgebungsabhängige Eigenschaftsgröße des Gegenstands (7-9) die Messgröße wiedergibt,
g) dass die umgebungsabhängige Eigenschaftsgröße des Gegenstands (7-9) das Fresnel-Beugungsbild beeinflusst, so dass das gemessene Fresnel-Beugungsbild des Gegenstands (7-9) die umgebungsabhängige Eigenschaftsgröße und damit auch die Messgröße wiedergibt,
h) dass eine Sensorschicht (11; 11') auf den Gegenstand (7'; 7-9) aufgebracht ist,
i) dass die umgebungsabhängige Eigenschaftsgröße des Gegenstands (7'; 7-9) ein Schichtparameter der Sensorschicht (11; 11') ist, und
j) dass das von dem Strahlungsdetektor (5) gemessene Fresnel-Beugungsbild von dem umgebungsabhängigen Schichtparameter der Sensorschicht (11; 11') abhängt und damit die Messgröße der Umgebung wiedergibt.

2. Messeinrichtung nach Anspruch 1,
**dadurch gekennzeichnet,**
a) **dass** der umgebungsabhängige Schichtparameter der Sensorschicht (11; 11') die Schichtdicke oder die Änderung der Schichtdicke der Sensorschicht (11; 11') ist, und/oder
b) **dass** der umgebungsabhängige Schichtparameter der Sensorschicht (11; 11') der Brechungsindex oder die Änderung des Brechungsindex der Sensorschicht (11; 11') ist, und/oder
c) **dass** der umgebungsabhängige Schichtparameter der Sensorschicht (11; 11') der Extinktionskoeffizient oder die Änderung des Extinktionskoeffizients der Sensorschicht (11; 11') ist, und/oder
d) **dass** der umgebungsabhängige Schichtparameter der Sensorschicht (11; 11') die Schichtstruktur oder die Änderung der Schichtstruktur der Sensorschicht (11; 11') ist.

3. Messeinrichtung nach Anspruch 1 oder 2, **dadurch gekennzeichnet, dass** die Sensorschicht (11; 11') aus einem Material besteht, das auf eine Änderung der Messgröße der Umgebung mit einer Änderung mindestens einer der folgenden Größen der Sensorschicht (11; 11') reagiert:
a) Schichtdicke,
b) Brechungsindex,
c) Extinktionskoeffizient,
d) Struktur.

4. Messeinrichtung nach einem der vorhergehenden Ansprüche, **dadurch gekennzeichnet, dass** die Messgröße mindestens eine der folgenden Größen ist:
a) ein physikalischer Parameter der Umgebung des Gegenstands (7-9), insbesondere
a1) Temperatur
a2) Druck,
a3) Lichtintensität,
a4) Intensität eines elektromagnetischen Feldes,
b) ein chemischer Parameter der Umgebung des Gegenstands (7-9), insbesondere
b1) pH-Wert,
b2) Konzentration einer Komponente in Lösung oder Gas,
c) ein biologischer Parameter der Umgebung des Gegenstands (7-9), insbesondere die Anwesenheit und/oder Konzentration eines bestimmten biologischen Targets.

5. Messeinrichtung nach einem der vorhergehenden Ansprüche, **dadurch gekennzeichnet,**
a) **dass** die Umgebung der Sensorschicht (11; 11') Target-Moleküle in einer bestimmten Konzentration enthält, und
b) **dass** die Sensorschicht (11; 11') Erkennungs-Elemente, insbesondere Molekular-Imprints, Enzyme, Nukleinsäuren, Aptamere, Antikörper, die auf die Target-Moleküle in der Umgebung ansprechen, insbesondere durch eine spezifische Bindung der Target-Moleküle an die Erkennungs-Elemente, so dass der umgebungsabhängige Schichtparameter der Sensorschicht (11; 11') von der Konzentration der Target-Moleküle in der Umgebung der Sensorschicht (11; 11') abhängt.

6. Messeinrichtung nach einem der vorhergehenden Ansprüche, **dadurch gekennzeichnet,**
a) **dass** die Umgebung des Gegenstands (7-9) eines Flüssigkeit ist, oder
b) **dass** die Umgebung des Gegenstands (7-9) ein Gas ist.

7. Messeinrichtung nach einem der vorhergehenden Ansprüche, **dadurch gekennzeichnet,**
a) **dass** der Gegenstand (7-9) einen kreisförmigen oder vieleckigen, insbesondere rechteckigen Querschnitt hat, und/oder
b) **dass** der Gegenstand (7-9) langgestreckt und mit seiner Längsachse rechtwinklig zu dem Strahlgang ausgerichtet ist, und/oder
c) **dass** der Gegenstand (7-9) in einem Behälter (3) angeordnet ist, insbesondere in einer Küvette (3), wobei der Behälter (3) für die Strahlung transparent ist.

8. Messeinrichtung nach einem der vorhergehenden Ansprüche, **dadurch gekennzeichnet,**
a) **dass** der Strahlungsdetektor (5) das Fresnel-Beugungsbild des Gegenstands (7-9) mit einer spektralen Auflösung und mit einer örtlichen Auflösung misst, und/oder
b) **dass** der Strahlungsdetektor (5) ein CCD-Detektor oder ein CMOS-Detektor ist, und/oder
c) **dass** der Strahlungsdetektor (5) ein Detektorarray mit einer flächigen Detektorfläche (6) ist, und/oder
d) **dass** mehrere Strahlungsdetektoren vorgesehen sind, die eine parallele Detektion ermöglichen.

9. Messeinrichtung nach einem der vorhergehenden Ansprüche, **dadurch gekennzeichnet,**
a) **dass** die von der Strahlungsquelle (1) emittierte Strahlung kohärent ist, und/oder
b) **dass** die von der Strahlungsquelle (1) emittierte Strahlung kollimiert ist, und/oder
c) **dass** die von der Strahlungsquelle (1) emittierte Strahlung homogen ist, und/oder
d) **dass** die Intensitätsabweichung der Strahlungsquelle (1) bekannt oder kalibriert ist, und/oder
e) **dass** die Strahlungsquelle (1) einen Laser aufweist, insbesondere einen Weißlichtlaser, eine Laserdiode oder ein Laserdioden-Array.

10. Messeinrichtung nach einem der vorhergehenden Ansprüche, **dadurch gekennzeichnet,**
a) **dass** die von der Strahlungsquelle (1) emittierte Strahlung nur eine einzige diskrete Wellenlänge aufweist, oder
b) **dass** die von der Strahlungsquelle (1) emittierte Strahlung mehrere diskrete Wellenlängen aufweist, oder
c) **dass** die von der Strahlungsquelle (1) emittierte Strahlung ein kontinuierliches Wellenlängenspektrum aufweist.

11. Messeinrichtung nach einem der vorhergehenden Ansprüche, **dadurch gekennzeichnet,**
a) **dass** der Gegenstand (7-9) und/oder die Sensorschicht (11; 11') für die Strahlung mindestens teilweise transparent ist, oder
b) **dass** der Gegenstand (7-9) und/oder die Sensorschicht (11; 11') für die Strahlung nicht transparent ist.

12. Messeinrichtung nach einem der vorhergehenden Ansprüche, **dadurch gekennzeichnet,**
a) **dass** im Strahlengang zwischen der Strahlungsquelle (1) und dem Strahlungsdetektor (5) mehrere Gegenstände (7-9) angeordnet sind, die jeweils ein Fresnel-Beugungsbild erzeugen,
b) **dass** der Strahlungsdetektor (5) die Fresnel-Beugungsbilder der einzelnen Gegenständen (7-9) misst, und/oder
c) **dass** die nicht wesentlich oder wesentlich überlappenden Fresnel-Beugungsbilder der einzelnen Gegenstände (7-9) an dem gleichen Strahlungsdetektor (5) gemessen werden.

13. Messverfahren zur Messung einer Messgröße mittels einer Beugungsmessung, mit den folgenden Schritten:
a) Bestrahlen mindestens eines Gegenstands (7-9) mit einer Strahlung,
b) Messen eines Fresnel-Beugungsbildes, und
c) Ableiten der Messgröße aus dem gemessenen Fresnel-Beugungsbild,
**dadurch gekennzeichnet,**
d) dass die zu messende Messgröße eine variable Eigenschaftsgröße des Gegenstands (7-9) beeinflusst, und
e) dass die umgebungsabhängige Eigenschaftsgröße des Gegenstands (7-9) das Fresnel-Beugungsbild beeinflusst,
f) dass eine Sensorschicht (11; 11') auf den Gegenstand (7'; 7-9) aufgebracht ist,
g) dass die umgebungsabhängige Eigenschaftsgröße des Gegenstands (7'; 7-9) ein Schichtparameter der Sensorschicht (11; 11') ist, und
h) dass das gemessene Fresnel-Beugungsbild von dem umgebungsabhängigen Schichtparameter der Sensorschicht (11; 11') abhängt und damit die Messgröße der Umgebung wiedergibt.

14. Messverfahren nach Anspruch 13, **dadurch gekennzeichnet,**
a) **dass** mehrere Fresnel-Beugungsbilder des Gegenstands (7-9) gemessen werden, insbesondere zeitlich und/oder räumlich voneinander getrennt, und
b) **dass** die Messgröße oder deren Änderung aus den verschiedenen Fresnel-Beugungsbildern abgeleitet wird.

## Claims

1. Measuring device for measuring a measured variable by means of a diffraction measurement, with
a) a radiation source (1) emitting radiation,
b) an object (7-9) arranged in the beam path of the radiation source (1), and
c) a radiation detector (5) disposed in the beam path of the radiation source (1) behind the object (7-9) and measuring a Fresnel diffraction image of the object (7-9),
d) an evaluation unit (12), wherein the radiation detector (5) is connected on the output side to the evaluation unit (12) and the evaluation unit (12) evaluates the measured Fresnel diffraction image and derives the measured variable from the measured Fresnel diffraction image,
**characterized in that,**
e) the measured variable to be measured is a property of an environment of the object (7-9),
f) the measured variable influences an environment-dependent property variable of the object (7-9) so that the environment-dependent property variable of the object (7-9) reflects the measured variable,
g) the environment-dependent property variable of the object (7-9) influences the Fresnel diffraction image, so that the measured Fresnel diffraction image of the object (7-9) reflects the environment-dependent property variable and thus also the measured quantity,
h) a sensor layer (11; 11') is applied to the object (7'; 7-9),
i) the environment-dependent property variable of the object (7'; 7-9) is a layer parameter of the sensor layer (11; 11'), and
j) the Fresnel diffraction image measured by the radiation detector (5) depends on the environment-dependent layer parameter of the sensor layer (11; 11') and thus reflects the measured variable of the environment.

2. Measuring device according to claim 1,
**characterized in that,**
a) the environment-dependent layer parameter of the sensor layer (11; 11') is the layer thickness or the change in the layer thickness of the sensor layer (11; 11'), and/or
b) that the environment-dependent layer parameter of the sensor layer (11; 11') is the refractive index or the change of the refractive index of the sensor layer (11; 11'), and/or
c) that the environment-dependent layer parameter of the sensor layer (11; 11') is the extinction coefficient or the change in the extinction coefficient of the sensor layer (11; 11'), and/or
d) that the environment-dependent layer parameter of the sensor layer (11; 11') is the layer structure or the change of the layer structure of the sensor layer (11; 11').

3. Measuring device according to claim 1 or 2, **characterized in that** the sensor layer (11; 11') consists of a material which reacts to a change in the measured variable of the environment with a change in at least one of the following variables of the sensor layer (11; 11'):
a) layer thickness,
b) refractive index,
c) extinction coefficient,
d) structure.

4. Measuring device according to one of the preceding claims, **characterized in that** the measured variable is at least one of the following quantities:
a) a physical parameter of the environment of the object (7-9), in particular
a1) temperature
a2) pressure,
a3) light intensity,
a4) intensity of an electromagnetic field,
b) a chemical parameter of the environment of the object (7-9), in particular
b1) pH value,
b2) concentration of a component in solution or gas,
c) a biological parameter of the environment of the object (7-9), in particular the presence and/or concentration of a specific biological target.

5. Measuring device in accordance with one of the preceding claims, **characterized in that**
a) the environment of the sensor layer (11; 11') contains target molecules in a certain concentration, and
b) **in that** the sensor layer (11; 11') comprises recognition elements, in particular molecular imprints, enzymes, nucleic acids, aptamers, antibodies which react to the target molecules in the environment, in particular by specifically binding the target molecules to the recognition elements, so that the environment-dependent layer parameter of the sensor layer (11 11') depends on the concentration of the target molecules in the vicinity of the sensor layer (11; 11').

6. Measuring device in accordance with one of the preceding claims, **characterized in that**
a) the environment of the object (7-9) is a liquid, or
b) that the environment of the object (7-9) is a gas.

7. Measuring device in accordance with one of the preceding claims, **characterized in that**
a) the object (7-9) has a circular or polygonal, in particular rectangular cross-section, and/or
b) that the object (7-9) is elongated and aligned with its longitudinal axis perpendicular to the beam path, and/or
c) that the object (7-9) is arranged in a container (3), in particular in a cuvette (3), the container (3) being transparent to the radiation.

8. Measuring device in accordance with one of the preceding claims, **characterized in that**
a) the radiation detector (5) measures the Fresnel diffraction image of the object (7-9) with a spectral resolution and a local resolution, and/or
b) that the radiation detector (5) is a CCD detector or a CMOS detector, and/or
c) that the radiation detector (5) is a detector array with a flat detector surface (6), and/or
d) a plurality of radiation detectors is provided to enable parallel detection.

9. Measuring device in accordance with one of the preceding claims, **characterized in that**
a) the radiation emitted by the radiation source (1) is coherent, and/or
b) that the radiation emitted by the radiation source (1) is collimated, and/or
c) that the radiation emitted by the radiation source (1) is homogeneous, and/or
d) that the intensity deviation of the radiation source (1) is known or calibrated, and/or
e) the radiation source (1) comprises a laser, in particular a white light laser, a laser diode or a laser diode array.

10. Measuring device in accordance with one of the preceding claims, **characterized in that**
a) the radiation emitted by the radiation source (1) has only a single discrete wavelength, or
b) that the radiation emitted from the radiation source (1) has several discrete wavelengths, or
c) the radiation emitted by the radiation source (1) has a continuous wavelength spectrum.

11. Measuring device in accordance with one of the preceding claims, **characterized in that**
a) the object (7-9) and/or the sensor layer (11; 11') is at least partially transparent to the radiation, or
b) the object (7-9) and/or the sensor layer (11; 11') is not transparent to the radiation.

12. Measuring device in accordance with one of the preceding claims, **characterized in that**
a) a plurality of objects (7-9) are arranged in the beam path between the radiation source (1) and the radiation detector (5), each of which generates a Fresnel diffraction image,
b) that the radiation detector (5) measures the Fresnel diffraction images of the individual objects (7-9), and/or
c) the Fresnel diffraction images of the individual objects (7-9) which do not substantially or substantially overlap are measured on the same radiation detector (5) .

13. Measuring method for measuring a measured variable by means of a diffraction measurement, comprising the following steps:
a) irradiating at least one object (7-9) with radiation,
b) measuring a Fresnel diffraction image, and
c) deriving the measured variable from the measured Fresnel diffraction image,
**characterized in that,**
d) the measured variable influences a variable property variable of the object (7-9), and
e) that the environment-dependent property variable of the object (7-9) influences the Fresnel diffraction image,
f) that a sensor layer (11; 11') is applied to the object (7'; 7-9),
g) that the environment-dependent property variable of the object (7'; 7-9) is a layer parameter of the sensor layer (11; 11'), and
h) that the measured Fresnel diffraction image depends on the environment-dependent layer parameter of the sensor layer (11; 11') and thus re-emits the measured variable of the environment.

14. Measuring method according to claim 13,
**characterized in that,**
a) several Fresnel diffraction images of the object (7-9) are measured, in particular separated in time and/or space, and
b) that the measured variable or its change is derived from the various Fresnel diffraction images.

## Revendications

1. Dispositif de mesure servant à mesurer une grandeur de mesure au moyen d'une mesure de diffraction, comprenant
a) une source de rayonnement (1) qui émet un rayonnement,
b) un objet (7 - 9), qui est disposé dans le chemin optique de la source de rayonnement (1), et
c) un détecteur de rayonnement (5), qui est disposé dans le chemin optique de la source de rayonnement (1) derrière l'objet (7 - 9) et qui mesure une image de diffraction de type Fresnel de l'objet (7 - 9),
d) une unité d'évaluation (12), dans lequel le détecteur de rayonnement (5) est relié côté sortie à l'unité d'évaluation (12) et l'unité d'évaluation (12) évalue l'image de diffraction de type Fresnel mesurée et déduit de l'image de diffraction de type Fresnel mesurée la grandeur de mesure,
**caractérisé en ce**
e) que la grandeur de mesure à mesurer est une propriété d'un environnement de l'objet (7 - 9),
f) que la grandeur de mesure influence une grandeur de propriété, dépendant de l'environnement, de l'objet (7 - 9) de sorte que la grandeur de propriété, dépendant de l'environnement, de l'objet (7 - 9) reproduit la grandeur de mesure,
g) que la grandeur de propriété, dépendant de l'environnement, de l'objet (7 - 9) influence l'image de diffraction de type Fresnel, de sorte que l'image de diffraction de type Fresnel mesurée de l'objet (7 - 9) reproduit la grandeur de propriété dépendant de l'environnement et reproduit ce faisant également la grandeur de mesure,
h) qu'une couche de capteur (11 ; 11') est installée sur l'objet (7' ; 7 - 9),
i) que la grandeur de propriété, dépendant de l'environnement, de l'objet (7' ; 7 - 9) est un paramètre de couche de la couche de capteur (11 ; 11'), et
j) que l'image de diffraction de type Fresnel mesurée par le détecteur de rayonnement (5) dépend du paramètre de couche, dépendant de l'environnement, de la couche de capteur (11 ; 11') et reproduit ce faisant la grandeur de mesure de l'environnement.

2. Dispositif de mesure selon la revendication 1, **caractérisé en ce**
a) **que** le paramètre de couche, dépendant de l'environnement, de la couche de capteur (11 ; 11') est l'épaisseur de couche ou la variation de l'épaisseur de couche de la couche de capteur (11 ; 11'),
et/ou
b) **que** le paramètre de couche, dépendant de l'environnement, de la couche de capteur (11 ; 11') est l'indice de réfraction ou la variation de l'indice de réfraction de la couche de capteur (11 ; 11'), et/ou
c) **que** le paramètre de couche, dépendant de l'environnement, de la couche de capteur (11 ; 11') est le coefficient d'extinction ou la variation du coefficient d'extinction de la couche de capteur (11 ; 11'), et/ou
d) **que** le paramètre de couche, dépendant de l'environnement, de la couche de capteur (11 ; 11') est la structure de couche ou la variation de la structure de couche de la couche de capteur (11 ; 11').

3. Dispositif de mesure selon la revendication 1 ou 2, **caractérisé en ce que** la couche de capteur (11 ; 11') est constituée d'un matériau, qui réagit à une variation de la grandeur de mesure de l'environnement par une variation au moins d'une des grandeurs suivantes de la couche de capteur (11 ; 11') :
a) l'épaisseur de couche,
b) l'indice de réfraction,
c) le coefficient d'extinction,
d) la structure.

4. Dispositif de mesure selon l'une quelconque des revendications précédentes, **caractérisé en ce que** la grandeur de mesure est au moins une des grandeurs suivantes :
a) un paramètre physique de l'environnement de l'objet (7 - 9), en particulier
a1) la température,
a2) la pression,
a3) l'intensité lumineuse,
a4) l'intensité d'un champ électromagnétique,
b) un paramètre chimique de l'environnement de l'objet (7 - 9), en particulier
b1) la valeur pH,
b2) la concentration d'un composant dans la solution ou le gaz,
c) un paramètre biologique de l'environnement de l'objet (7 - 9), en particulier la présence et/ou la concentration d'une cible biologique définie.

5. Dispositif de mesure selon l'une quelconque des revendications précédentes, **caractérisé en ce**
a) **que** l'environnement de la couche de capteur (11 ; 11') contient des molécules cibles en une concentration définie, et
b) **que** la couche de capteur (11 ; 11') contient des éléments d'identification, en particulier des impressions moléculaires, des enzymes, des acides nucléiques, des aptamères, des anticorps, qui répondent aux molécules cibles dans l'environnement, en particulier par une liaison spécifique des molécules cibles aux éléments d'identification de sorte que le paramètre de couche, dépendant de l'environnement, de la couche de capteur (11 ; 11') dépend de la concentration des molécules cibles dans l'environnement de la couche de capteur (11 ; 11').

6. Dispositif de mesure selon l'une quelconque des revendications précédentes, **caractérisé en ce**
a) **que** l'environnement de l'objet (7 - 9) est un liquide, ou
b) **que** l'environnement de l'objet (7 - 9) est un gaz.

7. Dispositif de mesure selon l'une quelconque des revendications précédentes, **caractérisé en ce**
a) **que** l'objet (7 - 9) a une section transversale de forme circulaire ou polygonale, en particulier rectangulaire,
et/ou
b) **que** l'objet (7 - 9) est étiré en longueur et est orienté par son axe longitudinal à angle droit par rapport au chemin optique, et/ou
c) **que** l'objet (7 - 9) est disposé dans un contenant (3), en particulier dans une cuvette (3), dans lequel le contenant (3) est transparent pour le rayonnement.

8. Dispositif de mesure selon l'une quelconque des revendications précédentes, **caractérisé en ce**
a) **que** le détecteur de rayonnement (5) mesure l'image de diffraction de type Fresnel de l'objet (7 - 9) avec une résolution spectrale et avec une résolution locale, et/ou
b) **que** le détecteur de rayonnement (5) est un détecteur CCD ou un détecteur CMOS, et/ou
c) **que** le détecteur de rayonnement (5) est un réseau de détecteurs pourvu d'une surface de détecteur (6) plate, et/ou
d) **que** sont prévus plusieurs détecteurs de rayonnement, qui permettent une détection parallèle.

9. Dispositif de mesure selon l'une quelconque des revendications précédentes, **caractérisé en ce**
a) **que** le rayonnement émis par la source de rayonnement (1) est cohérent, et/ou
b) **que** le rayonnement émis par la source de rayonnement (1) est collimaté, et/ou
c) **que** le rayonnement émis par la source de rayonnement (1) est homogène et/ou
d) **que** l'écart d'intensité de la source de rayonnement (1) est connu ou étalonné, et/ou
e) **que** la source de rayonnement (1) présente un laser, en particulier un laser à lumière blanche, une diode laser ou un réseau de diodes laser.

10. Dispositif de mesure selon l'une quelconque des revendications précédentes, **caractérisé en ce**
a) **que** le rayonnement émis par la source de rayonnement (1) ne présente qu'une unique longueur d'onde discrète, ou
b) **que** le rayonnement émis par la source de rayonnement (1) présente plusieurs longueurs d'onde discrètes, ou
c) **que** le rayonnement émis par la source de rayonnement (1) présente un spectre de longueurs d'onde continu.

11. Dispositif de mesure selon l'une quelconque des revendications précédentes, **caractérisé en ce**
a) **que** l'objet (7 - 9) et/ou la couche de capteur (11 ; 11') sont au moins en partie transparents pour le rayonnement, ou
b) **que** l'objet (7 - 9) et/ou la couche de capteur (11 ; 11') ne sont pas transparents pour le rayonnement.

12. Dispositif de mesure selon l'une quelconque des revendications précédentes, **caractérisé en ce**
a) **que** sont disposés dans le chemin optique entre la source de rayonnement (1) et le détecteur de rayonnement (5) plusieurs objets (7 - 9), qui génèrent respectivement une image de diffraction de type Fresnel,
b) **que** le détecteur de rayonnement (5) mesure les images de diffraction de type Fresnel des divers objets (7 - 9), et/ou
c) **que** les images de diffraction de type Fresnel ne se chevauchant pas sensiblement ou se chevauchant sensiblement des divers objets (7 - 9) sont mesurées au niveau du même détecteur de rayonnement (5).

13. Procédé de mesure servant à mesurer une grandeur de mesure au moyen d'une mesure de diffraction, comprenant les étapes qui suivent consistant à :
a) irradier au moins un objet (7 - 9) d'un rayonnement ;
b) mesurer une image de diffraction de type Fresnel ; et
c) déduire la grandeur de mesure de l'image de diffraction de type Fresnel mesurée,
**caractérisé en ce**
d) que la grandeur de mesure à mesurer influence une grandeur de propriété variable de l'objet (7 - 9), et
e) que la grandeur de propriété, dépendant de l'environnement, de l'objet (7 - 9) influence l'image de diffraction de type Fresnel,
f) qu'une couche de capteur (11 ; 11') est installée sur l'objet (7' ; 7 - 9),
g) que la grandeur de propriété, dépendant de l'environnement, de l'objet (7' ; 7 - 9) est un paramètre de couche de la couche de capteur (11 ; 11'), et
h) que l'image de diffraction de type Fresnel mesurée dépend du paramètre de couche, dépendant de l'environnement, de la couche de capteur (11 ; 11') et reproduit ce faisant la grandeur de mesure de l'environnement.

14. Procédé de mesure selon la revendication 13, **caractérisé en ce**
a) **que** plusieurs images de diffraction de type Fresnel de l'objet (7 - 9) sont mesurées, en particulier de manière séparée les unes des autres dans le temps et/ou dans l'espace, et
b) **que** la grandeur de mesure ou sa variation est déduite des différentes images de diffraction de type Fresnel.
